# EUROPEAN PATENT APPLICATION

(11) **EP 4 631 659 A1**
(43) Date of publication of application: **15.10.2025**
(21) Application number: 23918290.0
(22) Date of filing: 23.01.2023
(51) Int. Cl.: B23H 7/36, B23H 1/10

(54) **DEVICE FOR TREATING WATER FOR MACHINING**

(71) Applicant: FANUC CORPORATION, Oshino-mura Minamitsuru-gun Yamanashi 401-0597 (JP)
(72) Inventor: KASAI, Hirotsugu, 401-0597 Yamanashi (JP); MAKINO, Yoshinori, 401-0597 Yamanashi (JP)
(74) Representative: Keil & Schaafhausen Patentanwälte PartGmbB
(86) International application number: PCT/JP2023/001890
(87) International publication number: WO 2024/157317

(57) **Abstract**

One aspect of the present disclosure is a device for treating water for machining comprising: a wastewater tank that stores water discharged from a machining tank of an electrical discharge machine that performs electrical discharge machining of a workpiece; a filter that removes sludge contained in the water inside the wastewater tank; a freshwater tank that stores the water from which the sludge has been removed; a first water supply unit that supplies the water to the wastewater tank; and a first water discharge unit that discharges the water from the wastewater tank or the freshwater tank.

## Description

### TECHNICAL FIELD

The present disclosure relates to a machining water treatment device (device for treating water for machining).

### BACKGROUND ART

JP H05-002816 U discloses a working fluid supply device for a wire electrical discharge machine. In the working fluid supply device, water is used as the working fluid.

### SUMMARY OF THE INVENTION

It is desired to extend the life time of a filter for removing sludge contained in water (working fluid).

An aspect of the present disclosure is a machining water treatment device comprising: a sewage tank configured to store water discharged from a work-pan of an electrical discharge machine configured to perform electrical discharge machining on a workpiece; a filter configured to remove sludge contained in the water in the sewage tank; a clean water tank configured to store the water from which the sludge has been removed; a first water supply member configured to supply the water to the sewage tank and; a first drain member configured to discharge the water from the sewage tank or the clean water tank.

### BRIEF DESCRIPTION OF DRAWINGS

[FIG. 1] FIG. 1 is a diagram schematically showing the configuration of a machining water treatment device according to an embodiment;
[FIG. 2] FIG. 2 is a block diagram showing the configuration of a controller included in the machining water treatment device of the embodiment;
[FIG. 3] FIG. 3 is a flowchart showing an example of a processing procedure related to water supply control and drain control in the machining water treatment device of the embodiment;
[FIG. 4] FIG. 4 is a diagram schematically showing the configuration of the machining water treatment device according to a first modification;
[FIG. 5] FIG. 5 is a diagram schematically showing the configuration of the machining water treatment device according to a second modification;
[FIG. 6] FIG. 6 is a diagram schematically showing the configuration of the machining water treatment device according to a third modification;
[FIG. 7] FIG. 7 is a block diagram showing the configuration of the controller included in the machining water treatment device according to the third modification;
[FIG. 8] FIG. 8 is a flowchart showing an example of a processing procedure related to water supply control and drain control in the machining water treatment device according to the third modification;
[FIG. 9] FIG. 9 is a diagram schematically showing the configuration of the machining water treatment device according to a fourth modification;
[FIG. 10] FIG. 10 is a diagram schematically showing the configuration of the machining water treatment device according to a fifth modification;
[FIG. 11] FIG. 11 is a block diagram showing the configuration of the controller included in the machining water treatment device according to the fifth modification;
[FIG. 12] FIG. 12 is a flowchart showing an example of a processing procedure related to water supply control and drain control for a storage tank of the machining water treatment device according to the fifth modification;
[FIG. 13] FIG. 13 is a diagram schematically showing the configuration of the machining water treatment device according to a sixth modification;
[FIG. 14] FIG. 14 is a block diagram showing the configuration of the controller included in the machining water treatment device according to the sixth modification; and
[FIG. 15] FIG. 15 is a flowchart showing an example of a processing procedure related to drain control for the storage tank of the machining water treatment device according to the sixth modification.

### DETAILED DESCRIPTION OF THE INVENTION

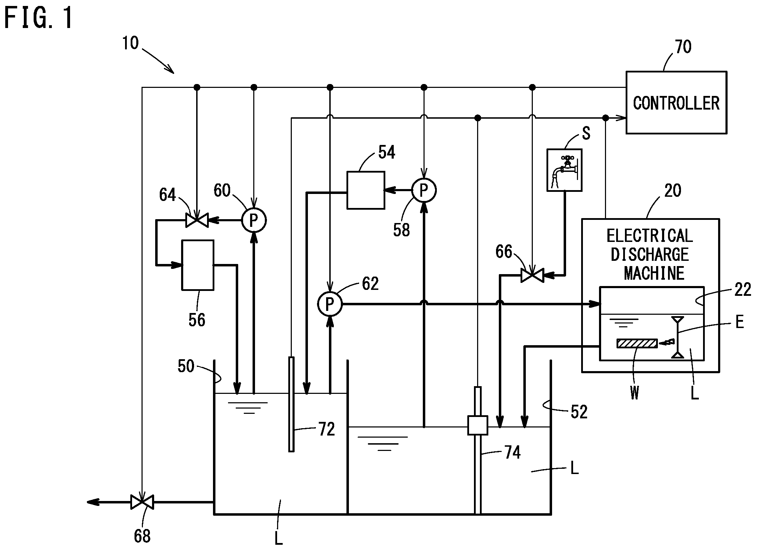

FIG. 1 is a diagram schematically showing the configuration of a machining water treatment device (dielectric fluid unit) 10 according to an embodiment. The machining water treatment device 10 supplies, to a work-pan 22 of an electrical discharge machine 20, water L for machining to be stored in a clean water tank 50. The machining water treatment device 10 recovers the water L from the work-pan 22 and stores the water in a sewage tank 52.

The electrical discharge machine 20 performs electrical discharge machining on a workpiece W by using electrical discharge generated at a machining gap between an electrode E and the workpiece W. The electrical discharge machine 20 is, for example, a wire electrical discharge machine, a die-sinking electrical discharge machine, a small hole electrical discharge machine, or the like. The electrical discharge machine 20 performs electrical discharge machining on the workpiece W in a state where the workpiece W is immersed in the water L in the work-pan 22.

Sludge (not shown), which is a waste material of the workpiece W, is generated in association with the electrical discharge machining and is mixed with the water L in the work-pan 22. Further, ions of the metal constituting the electrode E are desorbed from the electrode E by the electrical discharge machining and are mixed with the water L in the work-pan 22. The sludge and the metal ions are recovered into the sewage tank 52 together with the water L in a state of being contained in the water L.

The machining water treatment device 10 includes the clean water tank 50, the sewage tank 52, a filter 54, a first ion exchange resin 56, a first pump 58, a second pump 60, and a third pump 62. The machining water treatment device 10 further includes a first circulation supply member 64, a first water supply member 66, a first drain member 68, a controller 70, a resistivity sensor 72, and a water level sensor 74.

The sewage tank 52 stores the water L discharged from the work-pan 22 of the electrical discharge machine 20. The water L stored in the sewage tank 52 contains sludge. The first pump 58 sucks the water L from the sewage tank 52 and discharges the water L to the clean water tank 50 via the filter 54. The filter 54 removes the sludge contained in the water L. The clean water tank 50 stores the water L from which the sludge has been removed.

The water L stored in the sewage tank 52 contains ions of the metal constituting the electrode E. Accordingly, the water L moving from the sewage tank 52 to the clean water tank 50 also contains metal ions. In the present embodiment, the first circulation supply member 64 is a valve that blocks or allows the flow of the water L discharged from the second pump 60. The first circulation supply member 64 may be, instead of the valve, another member such as an inverter that adjusts the output of a motor (not shown) that causes the water L to be discharged from the second pump 60.

The second pump 60 sucks the water L from the clean water tank 50 and supplies the sucked water L to the first ion exchange resin 56. The first ion exchange resin 56 removes the above-described metal ions in the water L. The second pump 60 returns, to the clean water tank 50, the water L from which the metal ions have been removed by the first ion exchange resin 56. In this way, the water L in the clean water tank 50 is circulated through the first ion exchange resin 56, whereby the concentration of the metal ions in the circulated water L decreases. In the following description, the concentration of metal ions is also simply referred to as the concentration of metal.

The third pump 62 sucks the water L from the clean water tank 50 and discharges the sucked water L to the work-pan 22 of the electrical discharge machine 20. The water L in which the sludge and the metal ions have been reduced is supplied to the work-pan 22 by the third pump 62.

The first water supply member 66 is a valve capable of supplying, to the sewage tank 52, the water L supplied from a water supply source S. The water supply source S is, for example, a waterworks capable of supplying the water L by opening a faucet. In this case, the water L supplied from the water supply source S is tap water. When the valve as the first water supply member 66 is opened, the water L is supplied to the sewage tank 52. When the valve as the first water supply member 66 is closed, the supply of the water L to the sewage tank 52 is stopped.

The first drain member 68 is a valve capable of discharging the water L from the clean water tank 50 to the outside of the clean water tank 50. When the valve as the first drain member 68 is opened, the water L is discharged from the clean water tank 50. The water L discharged by the first drain member 68 may be disposed of in a sewage system, for example. When the valve as the first drain member 68 is closed, the discharge of the water L from the clean water tank 50 is stopped.

The resistivity sensor 72 detects the resistivity of the water L in the clean water tank 50. The resistivity sensor 72 outputs a detection signal including information about the detected resistivity to the controller 70. Based on the detection signal of the resistivity sensor 72, the controller 70 controls the first water supply member 66 to supply the water L to the sewage tank 52.

In the case where the resistivity of the water L in the clean water tank 50 is high, the resistivity of the water L in the sewage tank 52 is also high. Sludge contained in the water L in the sewage tank 52 is removed by the filter 54 while the water L is moved from the sewage tank 52 to the clean water tank 50 by the first pump 58.

In general, in the case where the material of the workpiece W is aluminum, the life time of the filter 54 is short. However, it has been found by experiments that even in the case where the workpiece W is made of aluminum, the life time of the filter 54 is extended by reducing the resistivity [Ω·m] of the water L. It should be noted that reducing the resistivity [Ω·m] corresponds to increasing the electrical conductivity [S/m].

The water supply source S of the water L supplied to the sewage tank 52 by the first water supply member 66 is, for example, a waterworks as described above. The resistivity of the water L supplied from the waterworks is low. By supplying the water L having a low resistivity to the sewage tank 52 during the electrical discharge machining, the value of the resistivity of the water L in the sewage tank 52 is suppressed to a low value. In this case, the life time of the filter 54 can be extended.

The water level sensor 74 detects the water level in the sewage tank 52. The water level sensor 74 outputs, to the controller 70, a detection signal including information about the detected water level in the sewage tank 52. Based on the detection signal of the water level sensor 74, the controller 70 controls the first drain member 68 to discharge the water L from the clean water tank 50. This can suppress a large fluctuation in the total amount of the water L stored in the work-pan 22, the clean water tank 50, and the sewage tank 52.

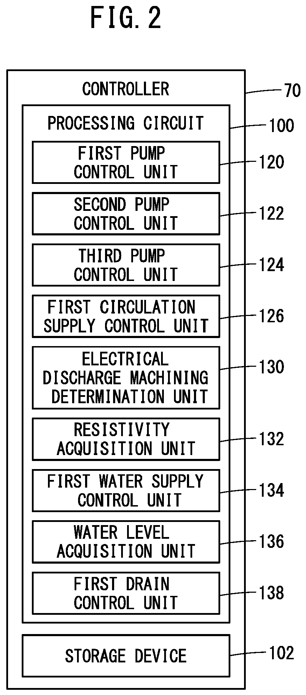

The controller 70 acquires information from the respective devices, namely, the electrical discharge machine 20, the resistivity sensor 72, and the water level sensor 74. The controller 70 controls the first pump 58, the second pump 60, the third pump 62, the first circulation supply member 64, the first water supply member 66, and the first drain member 68. An information acquisition process and a control process performed by the controller 70 will be described with reference to FIG. 2.

FIG. 2 is a block diagram showing the configuration of the controller 70 included in the machining water treatment device 10 of the present embodiment. The controller 70 includes a processing circuit 100 and a storage device 102. The processing circuit 100 includes a processor such as a CPU or a GPU. The storage device 102 includes a volatile memory such as a RAM, and a nonvolatile memory such as a ROM or a flash memory. The volatile memory is used as a working memory of the processor. The nonvolatile memory stores programs executed by the processor, and other necessary data.

The processing circuit 100 includes a first pump control unit 120, a second pump control unit 122, a third pump control unit 124, a first circulation supply control unit 126, an electrical discharge machining determination unit 130, a resistivity acquisition unit 132, a first water supply control unit 134, a water level acquisition unit 136, and a first drain control unit 138.

The processing circuit 100 executes the programs stored in the storage device 102, thereby realizing the first pump control unit 120, the second pump control unit 122, the third pump control unit 124, the first circulation supply control unit 126, the electrical discharge machining determination unit 130, the resistivity acquisition unit 132, the first water supply control unit 134, the water level acquisition unit 136, and the first drain control unit 138.

At least part of the first pump control unit 120, the second pump control unit 122, the third pump control unit 124, the first circulation supply control unit 126, the electrical discharge machining determination unit 130, the resistivity acquisition unit 132, the first water supply control unit 134, the water level acquisition unit 136, and the first drain control unit 138 may be realized by an integrated circuit such as an ASIC or an FPGA, or an electronic circuit including a discrete device.

The first pump control unit 120 controls a motor (not shown) that drives the first pump 58 to move the water L in the sewage tank 52 to the clean water tank 50 via the filter 54.

The second pump control unit 122 controls a motor (not shown) that drives the second pump 60 to circulate the water L in the clean water tank 50 to the first ion exchange resin 56. The first circulation supply control unit 126 controls a drive member (not shown) of the first circulation supply member 64 to block or allow the flow of the water L discharged to the first ion exchange resin 56 by the second pump 60.

The third pump control unit 124 controls a motor (not shown) that drives the third pump 62 to move the water L in the clean water tank 50 to the work-pan 22 of the electrical discharge machine 20.

The electrical discharge machining determination unit 130 acquires state information indicating the state of the electrical discharge machine 20 from a controller (not shown) of the electrical discharge machine 20. Based on the acquired state information, the electrical discharge machining determination unit 130 determines whether or not the electrical discharge machine 20 is performing electrical discharge machining.

The resistivity acquisition unit 132 acquires the detection signal output by the resistivity sensor 72. As described above, the detection signal of the resistivity sensor 72 includes the information about the resistivity detected by the resistivity sensor 72.

Based on the detection signal of the resistivity sensor 72 acquired by the resistivity acquisition unit 132, the first water supply control unit 134 controls a drive member (not shown) of the first water supply member 66 to supply the water L to the sewage tank 52.

The water level acquisition unit 136 acquires the detection signal output by the water level sensor 74. As described above, the detection signal of the water level sensor 74 includes the information about the water level detected by the water level sensor 74.

Based on the detection signal of the water level sensor 74 acquired by the water level acquisition unit 136, the first drain control unit 138 controls a drive member (not shown) of the first drain member 68 to discharge the water L from the clean water tank 50. In the case where the value of the water level is equal to or greater than a predetermined value, the water L is discharged from the clean water tank 50. It should be noted that the first drain control unit 138 may cause the same amount of the water L as the amount of the water L supplied by the first water supply member 66 to be discharged, without using the detection signal of the water level sensor 74.

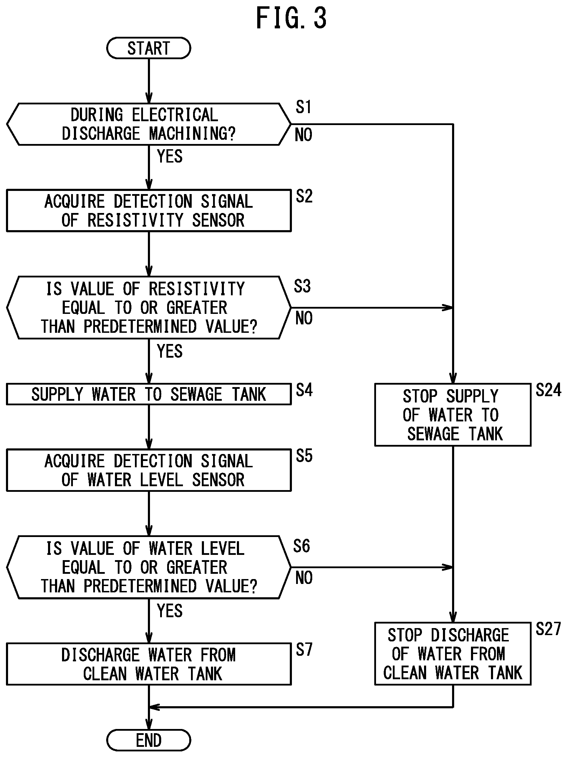

FIG. 3 is a flowchart showing an example of a processing procedure related to water supply control and drain control in the machining water treatment device 10 of the present embodiment. This processing procedure is performed at a predetermined cycle by, for example, the processing circuit 100 included in the controller 70.

It should be noted that the drive control of the first pump 58 by the first pump control unit 120, the drive control of the second pump 60 by the second pump control unit 122, the drive control of the first circulation supply member 64 by the first circulation supply control unit 126, and the drive control of the third pump 62 by the third pump control unit 124 are performed during the electrical discharge machining separately from this processing procedure.

Specifically, during the electrical discharge machining, the water L in the sewage tank 52 is circulated so as to return to the sewage tank 52 again via the clean water tank 50 and the work-pan 22, and this circulation is repeated. Further, during the electrical discharge machining, the water L in the clean water tank 50 is circulated so as to return to the clean water tank 50 via the first ion exchange resin 56, and this circulation is repeated.

When the processing procedure shown in FIG. 3 is started, the electrical discharge machining determination unit 130 acquires state information indicating the state of the electrical discharge machine 20 in step S1. Based on the acquired state information, the electrical discharge machining determination unit 130 determines whether or not the electrical discharge machine 20 is performing electrical discharge machining. In the case where the result in step S1 is YES, the processing procedure proceeds to step S2. In the case where the result in step S1 is NO, the processing procedure proceeds to step S24.

In step S2, the resistivity acquisition unit 132 acquires a detection signal of the resistivity sensor 72. In step S3, the first water supply control unit 134 determines whether or not the value of the resistivity acquired in step S2 is equal to or greater than a predetermined value. In the case where the result in step S3 is YES, the processing procedure proceeds to step S4. In the case where the result in step S3 is NO, the processing procedure proceeds to step S24.

In step S4, the first water supply control unit 134 controls the first water supply member 66 to supply the water L to the sewage tank 52. In the case where the supply of the water L has not been started at the time when the processing procedure proceeds to step S4, the supply of the water L is started. In the case where the supply of the water L has already been started, the supply of the water L is continued.

In the case where the value of the resistivity acquired in step S2 reaches the predetermined value or more, the water L is supplied to the sewage tank 52 in step S4. Therefore, an increase in the value of the resistivity in the sewage tank 52 is suppressed. Since the water L supplied to the sewage tank 52 is moved to the clean water tank 50 by the first pump 58, an increase in the resistivity indicated by the detection signal of the resistivity sensor 72 is also suppressed. In this case, an increase in the resistivity of the water L passing through the filter 54 is also suppressed. Therefore, it is possible to prevent the life time of the filter 54 from being shortened.

As described above, when the first water supply member 66 starts supplying the water L in step S4, the water L supplied to the sewage tank 52 is moved to the clean water tank 50 by the first pump 58. Therefore, at least the water level in the clean water tank 50 rises.

In step S5, the water level acquisition unit 136 acquires a detection signal of the water level sensor 74. In step S6, the first drain control unit 138 determines whether or not the value of the water level acquired in step S5 is equal to or greater than a predetermined value. In the case where the result in step S6 is YES, the processing procedure proceeds to step S7. In the case where the result in step S6 is NO, the processing procedure proceeds to step S27.

It is necessary to prevent the water L from overflowing from the clean water tank 50 due to the continuous supply of the water to the sewage tank 52 in and after step S4. In step S7, the first drain control unit 138 controls the first drain member 68 to discharge the water L from the clean water tank 50. In the case where the discharge of the water L has not been started at the time when the processing procedure proceeds to step S7, the discharge of the water L is started. In the case where the discharge of the water L has already been started, the discharge of the water L is continued.

That is, the first drain control unit 138 controls the first drain member 68 to start discharging the water L while the first water supply member 66 is supplying the water L. By discharging the water L from the clean water tank 50, the rise of the water level in the clean water tank 50 is suppressed. When the process of step S7 is completed, this processing procedure is ended.

In the case where the result in step S1 or S3 is NO, the processing procedure proceeds to step S24. In step S24, the first water supply control unit 134 controls the first water supply member 66 to stop supplying the water L to the sewage tank 52. In the case where the supply of the water L is being performed at the time when the processing procedure proceeds to step S24, the supply of the water L is stopped. In the case where the supply of the water L has already been stopped, the stoppage of the supply of the water L is continued.

In the case where the result in step S6 is NO, or the process in step S24 is completed, the processing procedure proceeds to step S27. In step S27, the first drain control unit 138 controls the first drain member 68 to stop discharging the water L from the clean water tank 50. In the case where the discharge of the water L is being performed at the time when the processing procedure proceeds to step S27, the discharge of the water L is stopped. In the case where the discharge of the water L has already been stopped, the stoppage of the discharge of the water L is continued.

According to the present embodiment, the first water supply member 66 supplies the water L having a low resistivity to the sewage tank 52 during the electrical discharge machining. Since an increase in the resistivity of the water L in the sewage tank 52 is suppressed, the life time of the filter 54 through which the water L moving from the sewage tank 52 to the clean water tank 50 passes can be extended.

The above-described embodiment may be modified in the following manner. In the following modifications, description overlapping with that of the embodiment will be omitted. Further, in the drawings used in the following modifications, the same components as those described in the embodiment are denoted by the same reference numerals.

### (Modification 1)

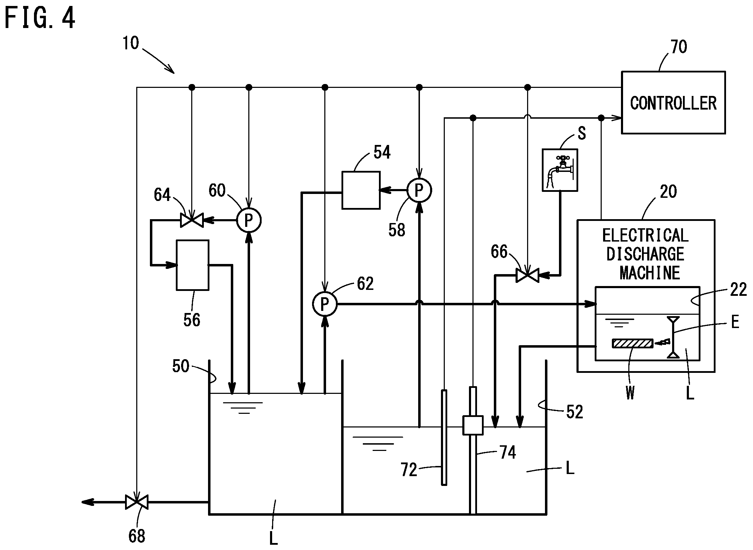

The resistivity sensor 72 may detect the resistivity of the water L in the sewage tank 52. FIG. 4 is a diagram schematically showing the configuration of the machining water treatment device 10 according to a first modification. FIG. 4 differs from FIG. 1 corresponding to the above-described embodiment in that the resistivity sensor 72 is disposed in the sewage tank 52.

The resistivity sensor 72 outputs, to the controller 70, a detection signal including information about the detected resistivity of the water L in the sewage tank 52. Based on the detection signal of the resistivity sensor 72, the first water supply control unit 134 of the controller 70 controls the first water supply member 66 to supply the water L to the sewage tank 52.

According to this modification, since the accuracy of detection of the resistivity performed by the resistivity sensor 72 is high, the control of water supply to the sewage tank 52 can be more appropriately performed.

### (Modification 2)

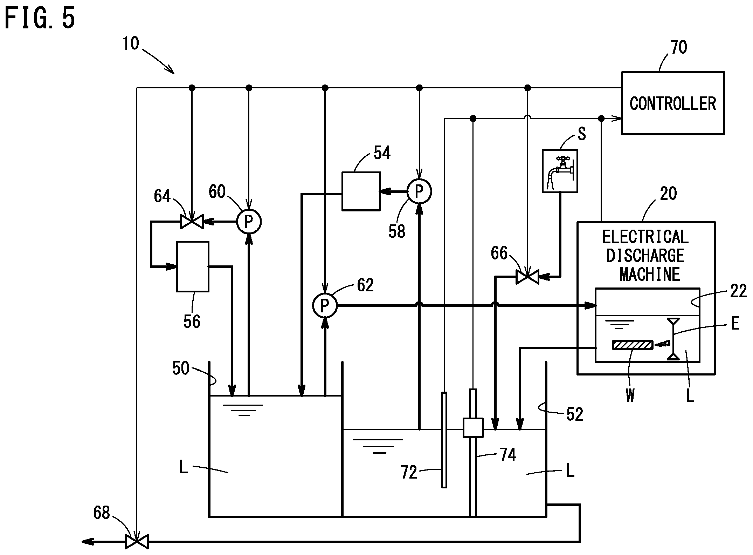

The first drain member 68 may be a valve capable of discharging the water L from the sewage tank 52 to the outside of the sewage tank 52. FIG. 5 is a diagram schematically showing the configuration of the machining water treatment device 10 according to a second modification. FIG. 5 differs from FIG. 4 corresponding to the first modification in that the first drain member 68 discharges the water L from the sewage tank 52.

Based on the detection signal of the water level sensor 74, the first drain control unit 138 controls the first drain member 68 to discharge the water L from the sewage tank 52. In the case where the value of the water level is equal to or greater than a predetermined value, the water L is discharged from the sewage tank 52. When the first water supply member 66 starts supplying the water L, at least the water level in the sewage tank 52 rises. In order to prevent the water L from overflowing from the sewage tank 52, the first drain control unit 138 controls the first drain member 68 to start discharging the water L while the first water supply member 66 is supplying the water L.

By discharging the water L from the sewage tank 52, the rise of the water level in the sewage tank 52 is suppressed. It should be noted that the water L discharged from the sewage tank 52 may be disposed of after being subjected to sludge removal treatment.

According to this modification, water is discharged from the sewage tank 52 to which water is supplied by the first water supply member 66. Therefore, it is possible to more accurately prevent the water L from overflowing from the sewage tank 52 or the clean water tank 50.

### (Modification 3)

The machining water treatment device 10 may further include a concentration sensor that detects the concentration of metal in the water L in the clean water tank 50. As described above, ions of the metal constituting the electrode E are desorbed from the electrode E by the electrical discharge machining and mixed with the water L in the work-pan 22. The metal ions are recovered together with the water L in the work-pan 22, and are therefore contained in the water L in the clean water tank 50 and the sewage tank 52.

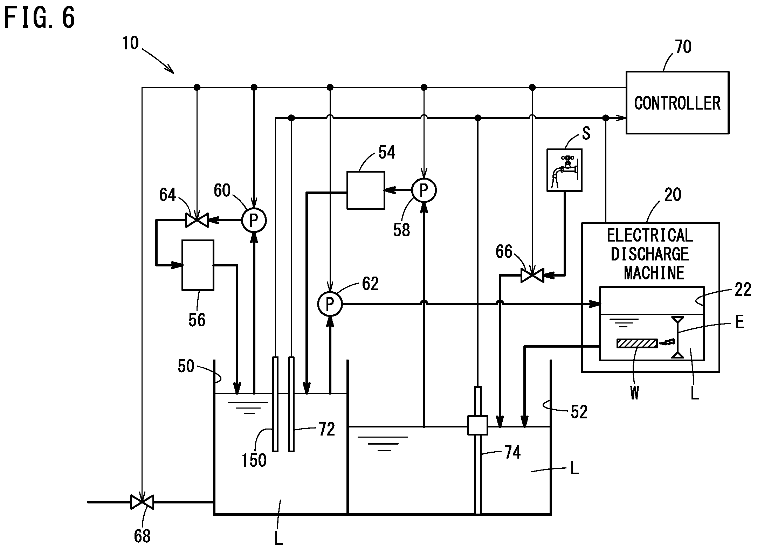

The metal constituting the electrode E is, for example, brass. Therefore, the metal ions mixed in the water L are copper ions and zinc ions. FIG. 6 is a diagram schematically showing the configuration of the machining water treatment device 10 according to a third modification. FIG. 6 differs from FIG. 1 corresponding to the above-described embodiment in that a concentration sensor 150 for detecting the concentration of metal in the water L in the clean water tank 50 is disposed in the clean water tank 50. The concentration sensor 150 outputs a detection signal including information about the detected concentration of the metal to the controller 70.

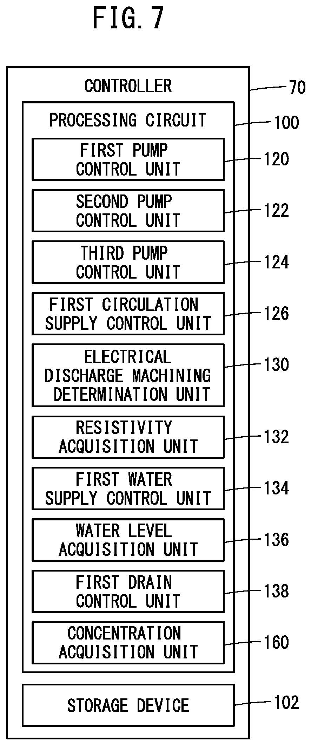

FIG. 7 is a block diagram showing the configuration of the controller 70 included in the machining water treatment device 10 according to the third modification. The processing circuit 100 of the controller 70 shown in FIG. 7 is obtained by further including a concentration acquisition unit 160 in the processing circuit 100 of the controller 70 shown in FIG. 2. The concentration acquisition unit 160 acquires the detection signal output by the concentration sensor 150. As described above, the detection signal of the concentration sensor 150 includes the information about the concentration of the metal detected by the concentration sensor 150.

As described above, the water L discharged from the work-pan 22 of the electrical discharge machine 20 contains copper ions and the like, which are ions of the metal constituting the electrode E. There is a case where disposal of the water L containing high concentration copper ions and the like is regulated by laws and ordinances. In this case, the concentration of copper ions and the like in the discharged water L needs to be less than a predetermined value defined by laws and ordinances.

The first drain control unit 138 controls the drive member (not shown) of the first drain member 68 to discharge the water L from the clean water tank 50, based on the detection signal of the water level sensor 74 and the detection signal of the concentration sensor 150 acquired by the concentration acquisition unit 160. In the case where the value of the concentration of the metal is less than a predetermined value, the first drain member 68 can discharge the water L from the clean water tank 50.

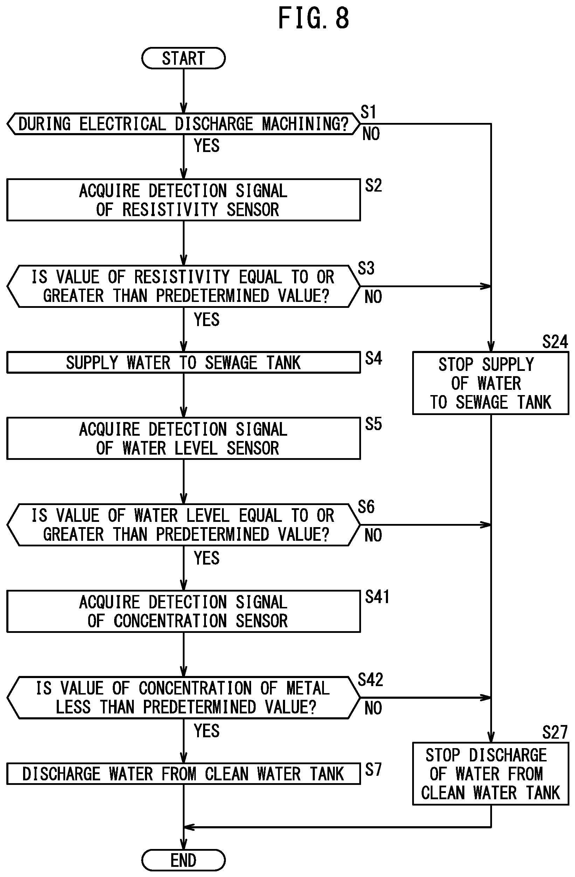

FIG. 8 is a flowchart showing an example of a processing procedure related to water supply control and drain control in the machining water treatment device 10 according to the third modification. This processing procedure is performed by, for example, the processing circuit 100 included in the controller 70. The reference numerals assigned to the steps of the processing procedure shown in FIG. 8 partially coincide with the reference numerals assigned to the steps of the processing procedure shown in FIG. 3. In the steps having the same reference numerals, the same process is executed, and therefore the description of the process in these steps will be omitted.

When the process of step S6 is completed, the processing procedure proceeds to step S41. In step S41, the concentration acquisition unit 160 acquires a detection signal of the concentration sensor 150. In step S42, the first drain control unit 138 determines whether or not the value of the concentration of the metal acquired in step S41 is less than a predetermined value. In the case where the result in step S42 is YES, the processing procedure proceeds to step S7. In the case where the result in step S42 is NO, the processing procedure proceeds to step S27.

There is a case where the value of the concentration of the metal may become less than the predetermined value by the first ion exchange resin 56 removing the ions of the metal from the water L in the clean water tank 50. According to the present embodiment, in the case where the value of the concentration of the metal is less than the predetermined value, the first drain member 68 can discharge the water L from the clean water tank 50. It is possible to discharge the water L from the machining water treatment device 10 while complying with the laws and ordinances regarding the metal concentration in wastewater.

### (Modification 4)

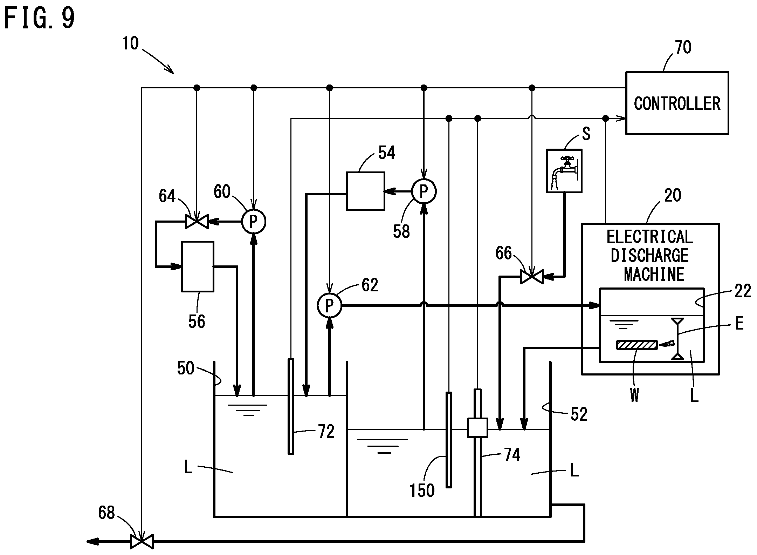

The concentration sensor 150 may detect the concentration of metal in the water L in the sewage tank 52. FIG. 9 is a diagram schematically showing the configuration of the machining water treatment device 10 according to a fourth modification. FIG. 9 differs from FIG. 6 corresponding to the third modification in that the concentration sensor 150 is disposed in the sewage tank 52. Further, in the machining water treatment device 10 shown in FIG. 9, the first drain member 68 discharges the water L from the sewage tank 52, as in FIG. 5 corresponding to the second modification.

The first drain control unit 138 controls the drive member (not shown) of the first drain member 68 to discharge the water L from the sewage tank 52, based on the detection signal of the water level sensor 74 and the detection signal of the concentration sensor 150 acquired by the concentration acquisition unit 160. In the case where the value of the concentration of the metal is less than a predetermined value, the first drain member 68 can discharge the water L from the sewage tank 52.

It should be noted that, in the case where the value of the concentration of the metal is equal to or greater than the predetermined value, the first drain member 68 does not need to discharge the water L from the sewage tank 52 while the first water supply member 66 is not supplying the water L to the sewage tank 52. In the case where the first water supply member 66 is supplying the water L to the sewage tank 52, the first drain member 68 can discharge the water L from the sewage tank 52 after the value of the concentration of the metal becomes less than the predetermined value due to the supply of the water. According to the present embodiment, it is possible to discharge the water L from the machining water treatment device 10 while complying with the laws and ordinances regarding the metal concentration in wastewater.

Further, the metal ions in the water L in the sewage tank 52 may be removed by an ion exchange resin (not shown). A pump (not shown) supplies the water L in the sewage tank 52 to the ion exchange resin, and returns the water L from which the metal ions have been removed to the sewage tank 52. This can reduce the concentration of the metal (the concentration of the metal ions) in the water L.

### (Modification 5)

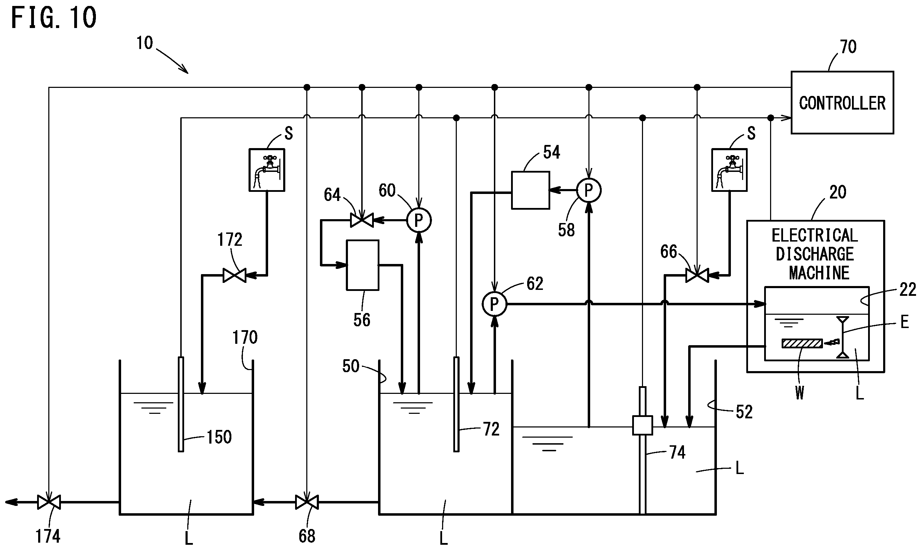

The water L discharged by the first drain member 68 may be stored in a storage tank 170. FIG. 10 is a diagram schematically showing the configuration of the machining water treatment device 10 according to a fifth modification. FIG. 10 differs from FIG. 1 corresponding to the above-described embodiment in that the machining water treatment device 10 further includes the concentration sensor 150, the storage tank 170, a second water supply member 172, and a second drain member 174.

The concentration sensor 150 is disposed in the storage tank 170. The concentration sensor 150 detects the concentration of metal in the water L in the storage tank 170. The concentration sensor 150 outputs a detection signal including information about the detected concentration of the metal to the controller 70.

As described above, the storage tank 170 stores the water L discharged from the clean water tank 50 by the first drain member 68. The concentration of the metal in the water L stored in the storage tank 170 may be high. There is a case where disposal of the water L containing high concentration metal ions is regulated by laws and ordinances. In this case, the concentration of metal ions in the discharged water L needs to be less than a predetermined value defined by laws and ordinances.

The second water supply member 172 is a valve capable of supplying, to the storage tank 170, the water L supplied from the water supply source S. When the valve as the second water supply member 172 is opened, the water L is supplied to the storage tank 170. When the valve as the second water supply member 172 is closed, the supply of the water L to the storage tank 170 is stopped. The concentration of the metal in the water L in the storage tank 170 can be less than the predetermined value due to the water supply by the second water supply member 172.

The second drain member 174 is a valve capable of discharging the water L from the storage tank 170 to the outside of the storage tank 170. When the valve as the second drain member 174 is opened, the water L is discharged from the storage tank 170. When the valve as the second drain member 174 is closed, the discharge of the water L from the storage tank 170 is stopped.

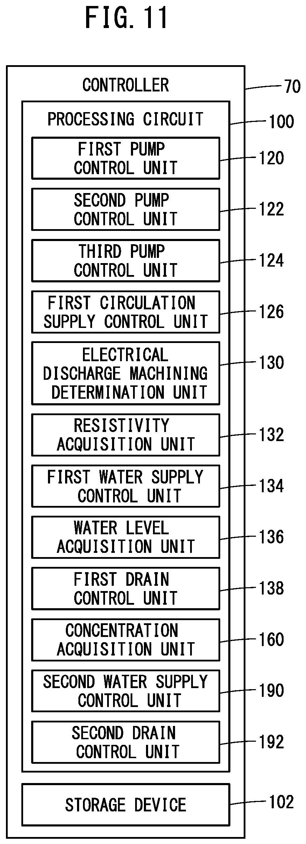

FIG. 11 is a block diagram showing the configuration of the controller 70 included in the machining water treatment device 10 according to the fifth modification. The processing circuit 100 of the controller 70 shown in FIG. 11 is obtained by further including the concentration acquisition unit 160, a second water supply control unit 190, and a second drain control unit 192 in the processing circuit 100 of the controller 70 shown in FIG. 2.

The concentration acquisition unit 160 acquires the detection signal output by the concentration sensor 150. As described above, the detection signal of the concentration sensor 150 includes the information about the concentration of the metal detected by the concentration sensor 150.

Based on the detection signal of the concentration sensor 150 acquired by the concentration acquisition unit 160, the second water supply control unit 190 controls a drive member (not shown) of the second water supply member 172 to supply the water L to the storage tank 170.

Based on the detection signal of the concentration sensor 150 acquired by the concentration acquisition unit 160, the second drain control unit 192 controls a drive member (not shown) of the second drain member 174 to discharge the water L from the storage tank 170. In the case where the value of the water level is equal to or greater than a predetermined value, the water L is discharged from the storage tank 170. In the case where the value of the concentration of the metal is less than a predetermined value, the second drain member 174 can discharge the water L from the storage tank 170.

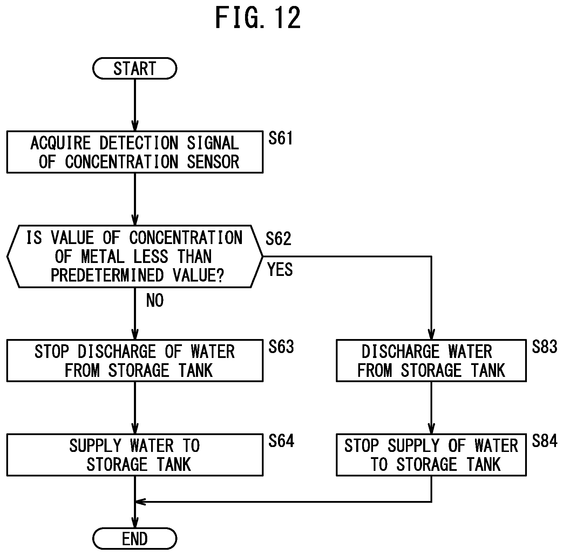

FIG. 12 is a flowchart showing an example of a processing procedure related to water supply control and drain control for the storage tank 170 of the machining water treatment device 10 according to the fifth modification. This processing procedure is performed by, for example, the processing circuit 100 included in the controller 70. It should be noted that the processing procedure related to the water supply control and the drain control for the clean water tank 50 and the sewage tank 52 is as shown in FIG. 3 corresponding to the above-described embodiment.

When the processing procedure is started, the concentration acquisition unit 160 acquires a detection signal of the concentration sensor 150 in step S61. In step S62, the second drain control unit 192 determines whether or not the value of the concentration of the metal acquired in step S61 is less than a predetermined value. In the case where the result in step S62 is YES, the processing procedure proceeds to step S83. In the case where the result in step S62 is NO, the processing procedure proceeds to step S63.

In step S63, the second drain control unit 192 controls the second drain member 174 to stop discharging the water L from the storage tank 170. In the case where the discharge of the water L is being performed at the time when the processing procedure proceeds to step S63, the discharge of the water L is stopped. In the case where the discharge of the water L has already been stopped, the stoppage of the discharge of the water L is continued.

In step S64, the second water supply control unit 190 controls the second water supply member 172 to supply the water L to the storage tank 170. The value of the concentration of the metal can be less than the predetermined value by the second water supply member 172 supplying the water L to the storage tank 170. When the process of step S64 is completed, this processing procedure is ended.

In the case where the result in step S62 is YES, the processing procedure proceeds to step S83. In step S83, the second drain control unit 192 controls the second drain member 174 to discharge the water L from the storage tank 170. In the case where the discharge of the water L has not been started at the time when the processing procedure proceeds to step S83, the discharge of the water L is started. In the case where the discharge of the water L has already been started, the discharge of the water L is continued.

In step S84, the second water supply control unit 190 controls the second water supply member 172 to stop supplying the water L to the storage tank 170. When the process of step S84 is completed, this processing procedure is ended.

According to the present embodiment, the water L discharged from the clean water tank 50 is stored in the storage tank 170 before being disposed of. Therefore, the water L can be discharged from the machining water treatment device 10 while more strictly complying with the laws and ordinances regarding the metal concentration in wastewater.

### (Modification 6)

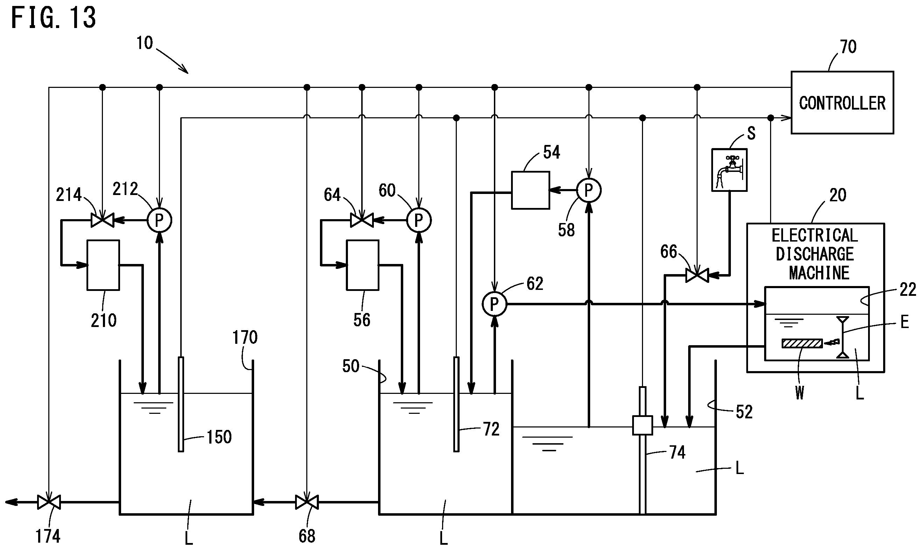

The metal ions in the water L in the storage tank 170 may be removed so that the concentration of the metal in the water L in the storage tank 170 becomes less than a predetermined value. FIG. 13 is a diagram schematically showing the configuration of the machining water treatment device 10 according to a sixth modification. FIG. 13 differs from FIG. 10 corresponding to the fifth modification in that the machining water treatment device 10 includes a second ion exchange resin 210, a fourth pump 212, and a second circulation supply member 214 instead of the second water supply member 172.

In the present modification, the second circulation supply member 214 is a valve that blocks or allows the flow of the water L discharged from the fourth pump 212. The second circulation supply member 214 may be, instead of the valve, another member such as an inverter that adjusts the output of a motor (not shown) that causes the water L to be discharged from the fourth pump 212.

The fourth pump 212 sucks the water L from the storage tank 170 and supplies the sucked water L to the second ion exchange resin 210. The second ion exchange resin 210 removes the above-described metal ions in the water L. The fourth pump 212 returns, to the storage tank 170, the water L from which the metal ions have been removed by the second ion exchange resin 210. In this way, the water L in the storage tank 170 is circulated through the second ion exchange resin 210, whereby the concentration of the metal in the circulated water L decreases.

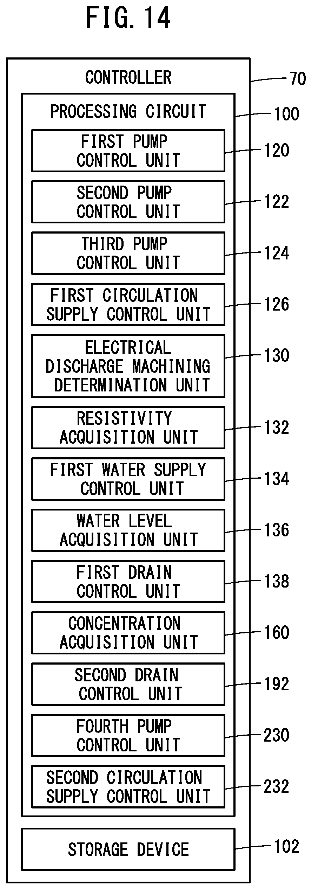

FIG. 14 is a block diagram showing the configuration of the controller 70 included in the machining water treatment device 10 according to the sixth modification. The processing circuit 100 of the controller 70 shown in FIG. 14 is obtained by including, in the processing circuit 100 of the controller 70 shown in FIG. 11, a fourth pump control unit 230 and a second circulation supply control unit 232 instead of the second water supply control unit 190.

The fourth pump control unit 230 controls a motor (not shown) that drives the fourth pump 212 to circulate the water L in the storage tank 170 to the second ion exchange resin 210. The second circulation supply control unit 232 controls a drive member (not shown) of the second circulation supply member 214 to block or allow the flow of the water L discharged to the second ion exchange resin 210 by the fourth pump 212.

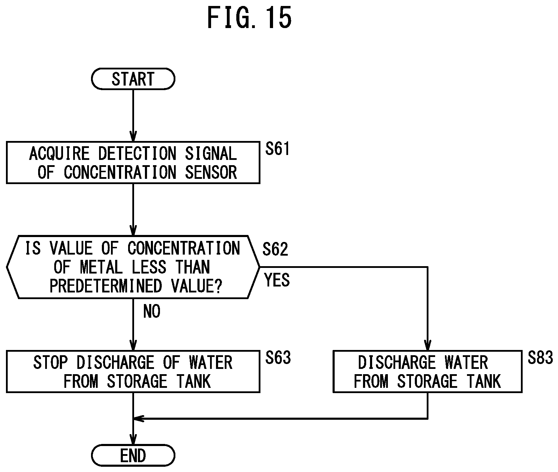

FIG. 15 is a flowchart showing an example of a processing procedure related to drain control for the storage tank 170 of the machining water treatment device 10 according to the sixth modification. This processing procedure is performed by, for example, the processing circuit 100 included in the controller 70. It should be noted that the processing procedure related to the water supply control and the drain control for the clean water tank 50 and the sewage tank 52 is as shown in FIG. 3 corresponding to the above-described embodiment.

Further, the drive control of the fourth pump 212 by the fourth pump control unit 230 and the drive control of the second circulation supply member 214 by the second circulation supply control unit 232 are performed separately from this processing procedure while the water L is being stored in the storage tank 170.

The processing procedure shown in FIG. 15 is the same as the processing procedure shown in FIG. 12 corresponding to the fifth modification, except that the processes of step S64 and step S84 are not performed.

According to the present embodiment, it is possible to discharge the water L from the machining water treatment device 10 while complying with the laws and ordinances regarding the metal concentration in wastewater.

In the embodiment and the modifications described above, the resistivity [Ω·m] of the water L that passes through the filter 54 is low. Therefore, the life time of the filter 54 can be extended.

The embodiment and the modifications described above may be arbitrarily combined.

The following supplementary notes are further disclosed in relation to the above-described embodiment and modifications.

### (Supplementary Note 1)

The present disclosure is the machining water treatment device (10) including: the sewage tank (52) configured to store water (L) discharged from the work-pan (22) of the electrical discharge machine (20) configured to perform electrical discharge machining on the workpiece (W); the filter (54) configured to remove sludge contained in the water in the sewage tank; the clean water tank (50) configured to store the water from which the sludge has been removed; the first water supply member (66) configured to supply the water to the sewage tank; and the first drain member (68) configured to discharge the water from the sewage tank or the clean water tank.

### (Supplementary Note 2)

The machining water treatment device according to Supplementary Note 1 may further include the first water supply control unit (134) configured to control the first water supply member to supply the water to the sewage tank during the electrical discharge machining.

### (Supplementary Note 3)

The machining water treatment device according to Supplementary Note 2 may further include the resistivity acquisition unit (132) configured to acquire a detection signal of the resistivity sensor (72) configured to detect resistivity of the water in the sewage tank or the clean water tank, and the first water supply control unit may control the first water supply member to supply the water based on the detection signal of the resistivity sensor.

### (Supplementary Note 4)

The machining water treatment device according to Supplementary Note 2 or 3 may further include the first drain control unit (138) configured to control the first drain member to discharge the water from the sewage tank or the clean water tank during the electrical discharge machining.

### (Supplementary Note 5)

In the machining water treatment device according to Supplementary Note 4, the first drain control unit may control the first drain member to start discharging the water while the first water supply member is supplying the water to the sewage tank.

### (Supplementary Note 6)

The machining water treatment device according to Supplementary Note 4 or 5 may further include the concentration acquisition unit (160) configured to acquire a detection signal of the concentration sensor (150) configured to detect a concentration of metal in the water in the sewage tank or the clean water tank from which the water is discharged by the first drain member, and the first drain control unit may control the first drain member to discharge the water based on the detection signal of the concentration sensor.

### (Supplementary Note 7)

The machining water treatment device according to Supplementary Note 6 may further include the first ion exchange resin (56) configured to remove ions of the metal in the water in the sewage tank or the clean water tank from which the water is discharged by the first drain member, and the pump (60) configured to supply, to the first ion exchange resin, the water in the sewage tank or the clean water tank from which the water is discharged by the first drain member, and to return the water from which the ions of the metal have been removed by the first ion exchange resin to the sewage tank or the clean water tank from which the water is discharged by the first drain member.

### (Supplementary Note 8)

The machining water treatment device according to any one of Supplementary Notes 1 to 5 may further include the storage tank (170) configured to store the water discharged by the first drain member, and the second drain member (174) configured to discharge the water from the storage tank.

### (Supplementary Note 9)

The machining water treatment device according to Supplementary Note 8 may further include: the concentration acquisition unit (160) configured to acquire the detection signal of the concentration sensor (150) configured to detect the concentration of the metal in the water in the storage tank from which the water is discharged by the second drain member; and the second drain control unit (192) configured to control the second drain member to discharge the water based on the detection signal of the concentration sensor.

### (Supplementary Note 10)

The machining water treatment device according to Supplementary Note 9 may further include: the second water supply member (172) configured to supply the water to the storage tank; and the second water supply control unit (190) configured to control the second water supply member to supply the water based on the detection signal of the concentration sensor.

### (Supplementary Note 11)

The machining water treatment device according to Supplementary Note 9 may further include: the second ion exchange resin (210) configured to remove ions of the metal in the water in the storage tank; and the pump (212) configured to supply the water in the storage tank to the second ion exchange resin, and to return the water from which the ions of the metal have been removed by the second ion exchange resin to the storage tank.

Although the present disclosure has been described in detail, the present disclosure is not limited to the above-described individual embodiments. Various additions, replacements, modifications, partial deletions, and the like can be made to these embodiments without departing from the essence and gist of the present disclosure or without departing from the essence and gist of the present disclosure derived from the claims and equivalents thereof. Further, these embodiments can also be implemented in combination. For example, in the above-described embodiments, the order of operations and the order of processes are shown as examples, and are not limited to these. Furthermore, the same applies to a case where numerical values or mathematical expressions are used in the description of the above-described embodiments.

### REFERENCE SIGNS LIST

- 10:: machining water treatment device
- 20:: electrical discharge machine
- 22:: work-pan
- 50:: clean water tank
- 52:: sewage tank
- 54:: filter
- 56:: first ion exchange resin
- 58:: first pump
- 60:: second pump
- 62:: third pump
- 64:: first circulation supply member
- 66:: first water supply member
- 68:: first drain member
- 70:: controller
- 72:: resistivity sensor
- 74:: water level sensor
- 100:: processing circuit
- 102:: storage device
- 120:: first pump control unit
- 122:: second pump control unit
- 124:: third pump control unit
- 126:: first circulation supply control unit
- 130:: electrical discharge machining determination unit
- 132:: resistivity acquisition unit
- 134:: first water supply control unit
- 136:: water level acquisition unit
- 138:: first drain control unit
- 150:: concentration sensor
- 160:: concentration acquisition unit
- 170:: storage tank
- 172:: second water supply member
- 174:: second drain member
- 190:: second water supply control unit
- 192:: second drain control unit
- 210:: second ion exchange resin
- 212:: fourth pump
- 214:: second circulation supply member
- 230:: fourth pump control unit
- 232:: second circulation supply control unit

## Claims

1. A machining water treatment device comprising:
a sewage tank configured to store water discharged from a work-pan of an electrical discharge machine configured to perform electrical discharge machining on a workpiece;
a filter configured to remove sludge contained in the water in the sewage tank;
a clean water tank configured to store the water from which the sludge has been removed;
a first water supply member configured to supply the water to the sewage tank; and
a first drain member configured to discharge the water from the sewage tank or the clean water tank.

2. The machining water treatment device according to claim 1, further comprising
a first water supply control unit configured to control the first water supply member to supply the water to the sewage tank during the electrical discharge machining.

3. The machining water treatment device according to claim 2, further comprising
a resistivity acquisition unit configured to acquire a detection signal of a resistivity sensor configured to detect resistivity of the water in the sewage tank or the clean water tank, wherein
the first water supply control unit controls the first water supply member to supply the water based on the detection signal of the resistivity sensor.

4. The machining water treatment device according to claim 2 or 3, further comprising
a first drain control unit configured to control the first drain member to discharge the water from the sewage tank or the clean water tank during the electrical discharge machining.

5. The machining water treatment device according to claim 4, wherein
the first drain control unit controls the first drain member to start discharging the water while the first water supply member is supplying the water to the sewage tank.

6. The machining water treatment device according to claim 4 or 5, further comprising
a concentration acquisition unit configured to acquire a detection signal of a concentration sensor configured to detect a concentration of metal in the water in the sewage tank or the clean water tank from which the water is discharged by the first drain member, wherein
the first drain control unit controls the first drain member to discharge the water based on the detection signal of the concentration sensor.

7. The machining water treatment device according to claim 6, further comprising:
a first ion exchange resin configured to remove ions of the metal in the water in the sewage tank or the clean water tank from which the water is discharged by the first drain member; and
a pump configured to supply, to the first ion exchange resin, the water in the sewage tank or the clean water tank from which the water is discharged by the first drain member, and to return the water from which the ions of the metal have been removed by the first ion exchange resin to the sewage tank or the clean water tank from which the water is discharged by the first drain member.

8. The machining water treatment device according to any one of claims 1 to 5, further comprising:
a storage tank configured to store the water discharged by the first drain member; and
a second drain member configured to discharge the water from the storage tank.

9. The machining water treatment device according to claim 8, further comprising:
a concentration acquisition unit configured to acquire a detection signal of a concentration sensor configured to detect a concentration of metal in the water in the storage tank from which the water is discharged by the second drain member; and
a second drain control unit configured to control the second drain member to discharge the water based on the detection signal of the concentration sensor.

10. The machining water treatment device according to claim 9, further comprising:
a second water supply member configured to supply the water to the storage tank; and
a second water supply control unit configured to control the second water supply member to supply the water based on the detection signal of the concentration sensor.

11. The machining water treatment device according to claim 9, further comprising:
a second ion exchange resin configured to remove ions of the metal in the water in the storage tank; and
a pump configured to supply the water in the storage tank to the second ion exchange resin, and to return the water from which the ions of the metal have been removed by the second ion exchange resin to the storage tank.
